Europäisches Patentamt

European Patent Office

Office européen des brevets

(19)

(11) Numéro de publication : **0 075 637**
**B1**

(12) **FASCICULE DE BREVET EUROPÉEN**

(45) Date de publication du fascicule du brevet :
02.01.86

(51) Int. Cl.⁴ : **A 01 F 15/14**

(21) Numéro de dépôt : **81401513.7**

(22) Date de dépôt : **30.09.81**

(54) **Mécanisme de nouage pour presses à balles et analogues.**

(43) Date de publication de la demande :
06.04.83 **Bulletin 83/14**

(45) Mention de la délivrance du brevet :
02.01.86 **Bulletin 86/01**

(84) Etats contractants désignés :
**DE FR GB IT NL**

(56) Documents cités :
**FR-A- 1 416 090**
**US-A- 2 872 860**
**US-A- 3 127 204**
**US-A- 3 248 139**
**US-A- 3 850 091**

(73) Titulaire : **JOHN DEERE (Société Anonyme)**
**8, Quai de la Madeleine**
**F-45000 Orléans (FR)**

(72) Inventeur : **Magny, Denis**
**10, Rue du Maréchal Leclerc**
**F-70100 Gray (FR)**

(74) Mandataire : **Pruvost, Marc Henri**
**Cabinet ORES 6, Avenue de Messine**
**F-75008 Paris (FR)**

Jouve, 18, rue St-Denis, 75001 Paris, France

EP 0 075 637 B1

## Description

La présente invention se rapporte aux mécanismes de nouage du type utilisé sur les presses à balles rectangulaires ou les machines analogues.

Il est usuel, notamment dans les presses à balles rectangulaires, de réaliser le liage des balles avant leur éjection, pour éviter tout éparpillement des produits de récolte, notamment du fourrage, comprimés en une balle.

Ce liage est effectué généralement vers chaque extrémité de la balle au moyen d'une ficelle ou d'un lien équivalent (le terme ficelle sera utilisé dans l'ensemble de la description pour des raisons de simplification). Un brin de ficelle est, au début de la formation de chaque balle dans la presse, maintenu dans un disque de ficelle par un reteneur de ficelle, et la ficelle est prélevée à la boîte à ficelle prévue sur la presse par la balle en cours de formation, de sorte que vers la fin de cette opération de formation de la balle la ficelle entoure sensiblement celle-ci sur trois côtés.

Lorsque la balle a atteint la longueur désirée, un dispositif de mesure prévu sur la presse commande les opérations terminant le liage et assurant le nouage de la ficelle. A cet effet, l'aiguille du mécanisme, en se déplaçant dans une fente du plastron de la chambre à balles de la presse, amène le second brin de la ficelle au mécanisme de nouage, plus spécialement à portée d'un doigt pousse-ficelle, qui la maintient en position pour sa reprise en vue de former le nœud. La rotation du bec noueur forme ensuite une boucle de ficelle et le couteau sectionne la ficelle entre ce bec noueur et le disque de ficelle. L'éjecteur du mécanisme intervient alors pour éjecter la boucle de ficelle hors du bec noueur, tandis que les mâchoires de celui-ci maintiennent les extrémités coupées de la ficelle pour compléter le nœud, lequel échappe ensuite au bec noueur, ce qui termine l'opération de liage de la balle.

Le disque de ficelle retient l'extrémité de la ficelle en vue de l'opération suivante, tandis que l'aiguille revient en arrière, en dégageant le passage de la chambre à balles. Le brin de ficelle retenu par le disque pend à travers la chambre à balles pour être intercepté par la balle suivante en cours de formation, en vue de la préparation au cycle de liage suivant.

L'invention concerne plus spécialement la partie du mécanisme de nouage assurant le maintien et le guidage du second brin de ficelle amené par l'aiguille au doigt pousse-ficelle.

D'une manière en soi connue, ce doigt pousse-ficelle est monté de façon pivotante sur une platine portée elle-même par le plastron de la chambre à balles, ou directement sur ce plastron. Il présente un bec et il est relié par une tige, biellette ou analogue à un organe d'actionnement, qui provoque son pivotement quand le second brin de ficelle a été amené par l'aiguille jusqu'au disque et au reteneur de ficelle. Des moyens ont été proposés précédemment (Brevet U.S. 2 926 599, Brevet U.S. 2 872 860) pour retenir la ficelle déplacée par le mouvement de pivotement du doigt pousse-ficelle lors du retour en arrière de ce doigt. Ces moyens sont constitués par exemple par un bec de retenue ou par un ressort, qui coopèrent avec le doigt pousse-ficelle pour guider la ficelle.

Toutefois, la pratique montre que, dans les mécanismes existants, les éléments formés par l'éjecteur, le disque et le reteneur de ficelle sont soumis lors du travail à des charges ou efforts relativement importants sous l'effet de la traction exercée par le brin de ficelle entraîné par la partie de la balle progressant dans la chambre à balles de la presse. Il se produit en effet, à chaque coup du piston de la presse, un effort de traction qui est transmis directement par le premier brin de ficelle à ces organes et qui provoque leur fatigue prématurée. Des charges élevées sont également exercées pendant le travail sur le doigt pousse-ficelle.

Le but de l'invention est de remédier aux inconvénients des mécanismes existants et de créer un mécanisme de nouage pour presse à balles évitant ces charges élevées sur les organes du mécanisme.

L'invention est matérialisée en conséquence dans un mécanisme de nouage pour presses à balles ou analogues, du type comprenant un disque de ficelle dans lequel un premier brin d'une ficelle de liage de la balle est retenu, un bec noueur dans lequel ce premier brin de ficelle est engagé, un doigt pousse-ficelle pivotant sur un axe vertical fixé à la plaque supérieure ou plastron de la chambre à balles de la presse et à portée duquel le second brin de la ficelle de liage, qui entoure la balle, est amené par une aiguille se déplaçant dans une fente du plastron de la chambre à balles de la presse pour placer ce second brin sur le disque-reteneur de ficelle, ce doigt pousse-ficelle présentant un bord terminé par un bec et situé en position de repos du doigt au droit de la fente et déplaçant le second brin bec noueur pour la formation du nœud, et un guide-ficelle monté sur le plastron, fonctionnellement associé au doigt pousse-ficelle et placé à proximité de celui-ci, caractérisé en ce que ce guide-ficelle comprend une première partie s'étendant en principe transversalement à la fente du plastron de la chambre à balles de la presse en aval par rapport à la zone d'action du doigt pousse-ficelle, et une seconde partie orientée sensiblement selon la direction de cette fente et s'étendant depuis cette première partie dans un sens opposé au sens de déplacement des balles, cette première et cette seconde parties du guide-ficelle se rejoignant en un point situé au droit de cette fente et ladite seconde partie s'étendant au-dessus d'une longueur partielle du bord du doigt pousse-ficelle, dans la position de repos de ce dernier.

Suivant un mode de réalisation paraissant avantageux, ce guide-ficelle est constitué par une pièce en forme d'équerre comprenant une première branche s'étendant en principe transversalement à la fente et une seconde branche s'étendant depuis la première branche en principe dans la direction opposée au sens de déplacement de l'aiguille dans cette fente, cette première et cette seconde branches formant entre elles un coude situé au droit de la fente. La seconde branche conserve alors une élasticité favorisant le guidage de la ficelle.

Le guide-ficelle en équerre est fixé judicieusement par l'extrémité de sa branche transversale sur le plastron de la chambre à balles de la presse.

De préférence, un bras de fixation s'étend à partir du coude du guide-ficelle, à l'opposé du côté ouvert de ce coude, et est fixé sur la paroi de la chambre à balles du côté opposé de la fente par rapport à la branche transversale.

Suivant une réalisation préférentielle, la seconde partie ou branche du guide-ficelle est légèrement inclinée par rapport à la direction de la fente depuis le coude, jusqu'en un point situé de l'autre côté de la fente par rapport à la première partie ou branche.

Cette seconde partie ou branche est munie avantageusement, à son extrémité opposée à la première partie ou branche, d'un bec orienté à l'opposé de la première partie ou branche par rapport à la fente.

Le point ou coude du guide-ficelle peut se trouver sensiblement au milieu de la largeur de la fente.

Grâce à la présence d'un guide-ficelle suivant l'invention, le brin de ficelle qui est, au début de l'opération de formation d'une balle, retenu par le disque et le reteneur de ficelle et qui subit l'effort de traction résultant de la progression de la balle dans la chambre à balles à chaque coup de piston de la presse peut, entre les organes précités du mécanisme de nouage et la partie entourant la balle et supportant ainsi l'effort de traction exercé, passer dans l'angle du guide-ficelle en équerre, ce qui modifie le trajet de ce brin de ficelle et évite de ce fait une transmission directe des efforts ainsi exercés aux pièces ou éléments précités du mécanisme de nouage. Ce trajet modifié de la ficelle évite également la transmission de charges élevées à l'éjecteur.

Lorsque l'aiguille amène le second brin de ficelle au mécanisme de nouage, la ficelle qui se trouve au-delà du bec du doigt pousse-ficelle repose très peu sur ce doigt, du fait de la présence d'une branche du guide-ficelle au droit de la fente de passage de l'aiguille, mais prend appui au contraire sur cette branche du guide-ficelle, ce qui soustrait également le doigt pousse-ficelle aux efforts qui autrement seraient exercés sur lui par le second brin de la ficelle de liage.

La description qui va suivre, faite en regard des dessins annexés, donnés à titre non limitatif, permettra de mieux comprendre l'invention.

La Figure 1 est une représentation en perspective partielle d'un mécanisme de nouage, montrant le guide-ficelle prévu suivant l'invention et sa relation avec les autres éléments du mécanisme.

La Figure 2 est une vue schématique partielle à plus grande échelle montrant ce guide-ficelle en plan.

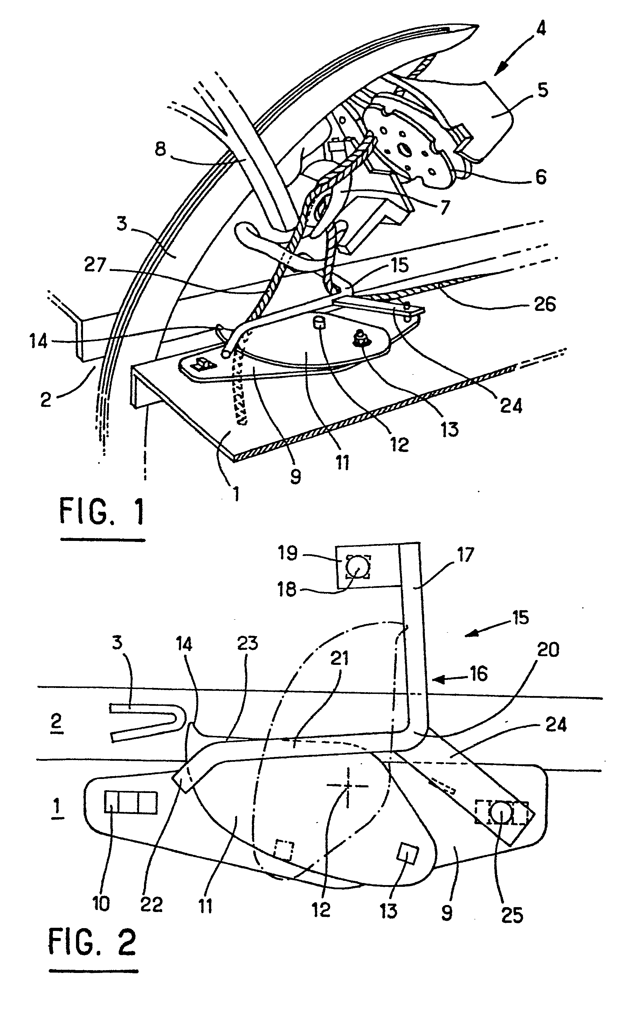

Sur la Figure 1, on a désigné par la référence 1 le plastron ou la paroi de la chambre à balles d'une presse à balles rectangulaires qui peut être d'un type quelconque, en soi bien connu. Les balles sont formées à partir des produits de récolte ramassés, à l'intérieur de cette chambre, sous l'effet d'un piston qui comprime lesdits produits en provoquant la formation progressive d'une balle qui avance dans ladite chambre. Pendant cette formation de la balle, un brin de ficelle de liage est entraîné vers l'arrière par l'extrémité de la balle. Ce brin de ficelle est retenu à son extrémité. La ficelle est prélevée au fur et à mesure à une boîte à ficelle prévue sur la presse. Quand la balle a atteint la longueur désirée, le nouage de la ficelle pour le liage de la balle est assuré. Il est prévu généralement une ficelle de liage vers chaque extrémité ou vers chaque côté de la balle.

On a montré en 2 sur la Figure 1 l'une des fentes ménagées dans la paroi 1 de la chambre à balles pour le passage d'une aiguille 3, d'une manière en soi bien connue.

On a indiqué d'une façon générale en 4 l'un des mécanismes de nouage, qui comprend un support 5 servant au montage d'un reteneur de ficelle en forme de disque 6. On a indiqué par ailleurs en 7 le bec du noueur du mécanisme et en 8 le bras porte-couteau. L'éjecteur (non représenté) est fonctionnellement associé au bec noueur. Tous ces éléments du mécanisme de nouage sont bien connus.

Une platine 9 est fixée vers ses extrémités, au moyen de vis, sur la paroi 1 de la chambre à balles. Ces vis traversent de manière connue des fentes 10 de la platine 9, pour permettre le réglage de celle-ci. Un doigt pousse-ficelle 11 est monté sur la platine 9 de manière à pouvoir pivoter autour d'un axe 12. Un téton 13 de ce doigt pousse-ficelle est attaqué par une tige d'actionnement déplacée elle-même par un dispositif de commande (non représenté), d'une manière en soi bien connue dans cette technique.

On voit sur le dessin et en particulier sur la Fig. 2 que le bord supérieur 23 du doigt pousse-ficelle 11 s'étend en partie au droit de la fente 2, ce bord se terminant par un bec 14, également de manière connue.

Un guide-ficelle 15 est disposé au-dessus du plan de ce doigt pousse-ficelle 11.

Comme visible en particulier sur la Fig. 2, ce guide-ficelle 15 comprend une partie en forme d'équerre 16 comportant une première branche 17 orientée en principe perpendiculairement à l'axe longitudinal de la fente 2 et fixée par une extrémité sur la paroi 1 de la chambre à balles, au moyen d'une vis 18 traversant une patte 19. Comme montré sur la Fig. 2, le coude 20 de cette partie en équerre 16 du guide-ficelle 15 se trouve au droit de la fente 2, l'angle intérieur de ce coude étant situé sensiblement au milieu de cette fente. La seconde branche 21 de la partie en équerre 16 s'étend depuis le coude 20 dans une direction qui est d'une façon générale opposée à la direction de déplacement de la balle et à la direction d'amenée du second brin de ficelle par l'aiguille 3. Cette seconde branche 21 est de préférence un peu inclinée sur l'axe longitudinal de la fente 2, vers le côté de cette fente opposé à la branche de fixation 17, et elle se termine par un bec 22 qui est coudé vers l'extérieur à l'écart de la fente. On voit sur la Fig. 2 que la branche 21 de la partie coudée 16 se trouve au-dessus du bord 23 du doigt pousse-ficelle 11 terminé par le bec 14 et occupe par rapport à ce bord, quand le doigt pousse-ficelle est en condition de repos, une position telle que seule une petite partie de la longueur du bord 23, mesurée à partir du bec 14, se trouve en saillie par rapport au bord intérieur de la branche 21 quand on considère l'ensemble en plan.

L'immobilisation du guide-ficelle 15 est complétée au moyen d'un bras 24 qui s'étend à partir du coude 20 et qui est fixé sur la paroi 1 de la chambre à balles du côté de la fente 2 opposé à la fixation de la branche 17, par exemple au moyen de la vis 25 servant au montage de la platine 9 sur cette paroi 1.

Si l'on se reporte à nouveau à la Fig. 1, on voit que pendant la formation de la balle, le premier brin de ficelle, qui est indiqué en 26, s'étend depuis le reteneur de ficelle 6 en passant dans l'angle formé par le coude 20 du guide-ficelle 15, au lieu de s'étendre directement sur la balle à partir des éléments du mécanisme de nouage formés par le bras porte-couteau, l'éjecteur, etc... comme cela est le cas habituellement. Du fait de cette modification du trajet du brin de ficelle 26, les efforts de traction qui s'exercent sur ce brin de ficelle à chaque coup de piston de la presse du fait de la progression de la balle dans la chambre à balles ne sont plus transmis directement aux organes précités du mécanisme de nouage. Leur effet sur ces organes est très diminué, étant donné que l'effort principal est absorbé par le guide-ficelle 15 et plus spécialement par le coude 20 et la branche 17. Etant donné que cette partie du guide-ficelle 15 est maintenue fermement par les points de fixation prévus en 18 et 25, le guide-ficelle résiste parfaitement à l'effort exercé et sa présence soustrait les éléments du mécanisme de nouage aux charges qui leur sont autrement transmises.

Par ailleurs, lorsque le second brin de ficelle est amené au mécanisme de nouage par l'aiguille 3, il franchit de la façon usuelle le bec 14 du doigt pousse-ficelle 11. Compte tenu de la disposition précitée de la branche 21 du guide-ficelle, ce second brin de ficelle, indiqué en 27 sur la Fig. 1, vient très rapidement en contact avec cette branche 21 du guide-ficelle et cesse d'exercer une charge sur le doigt pousse-ficelle. Lors du pivotement de ce doigt pousse-ficelle d'une manière en soi connue pour parvenir dans la position indiquée en traits mixtes sur la Fig. 2, le second brin de ficelle glisse le long du bord de la branche 21 du guide-ficelle 15 dirigé vers l'intérieur de la fente 2, de sorte que dans ce cas encore le doigt pousse-ficelle 11 est soustrait à la charge qui serait autrement exercée sur lui par ce second brin de la ficelle de liage. En fin de course de pivotement du doigt pousse-ficelle, ce second brin de la ficelle repose sur la branche 21 au voisinage du coude 20. Etant donné que cette branche 21 s'étend librement à partir du coude, elle dispose en outre d'une certaine élasticité, qui lui permet d'absorber plus facilement les efforts exercés. On notera enfin que le bec 22 orienté à l'écart de la fente 2 permet d'éviter avec certitude un engagement de la ficelle du mauvais côté de la branche 21.

Ainsi, le guide-ficelle prévu suivant l'invention soustrait les organes du mécanisme de nouage aux charges défavorables qui sont autrement exercées et augmente en conséquence, par sa fonction, la longévité de ces organes.

Des modifications peuvent être apportées au mode de réalisation décrit, dans le domaine des équivalences techniques, sans s'écarter de l'invention.

## Revendications

1. Mécanisme de nouage pour presses à balles ou analogues, du type comprenant un disque de ficelle (6) dans lequel un premier brin (26) d'une ficelle de liage de la balle est retenu, un bec noueur (7) dans lequel ce premier brin de ficelle (26) est engagé, un doigt pousse-ficelle pivotant (11) sur un axe vertical (12) fixé à la plaque supérieure ou plastron (1) de la chambre à balles de la presse et à portée duquel le second brin (27) de la ficelle de liage, qui entoure la balle, est amené par une aiguille (3) se déplaçant dans une fente (2) du plastron (1) de la chambre à balles de la presse pour placer ce second brin (27) sur le disque-reteneur (6) de ficelle, ce doigt pousse-ficelle (11) présentant un bord (23) terminé par un bec (14) et situé en position de repos du doigt au droit de la fente (2) et déplaçant le second brin à l'aplomb du bec noueur (7) pour la formation du nœud, et un guide-ficelle (15) monté sur le plastron (1), fonctionnellement associé au doigt pousse-ficelle et placé à proximité de celui-ci, caractérisé en ce que ce guide-ficelle (15) comprend une première partie (17) s'étendant en principe transversalement à la fente (2) du plastron (1) de la chambre à balles de la presse en aval par rapport à la zone d'action du doigt pousse-ficelle (11), et une seconde partie (21) orientée sensiblement selon la direction de cette fente et s'étendant depuis cette première partie dans un sens opposé au sens de déplacement des balles, cette première et cette seconde parties (17, 21) du guide-ficelle (15) se rejoignant en un point situé au droit de cette fente (2) et ladite seconde partie (21) s'étendant au-dessus d'une longueur partielle du bord (23) du doigt pousse-ficelle (11), dans la position de repos de ce dernier.

2. Mécanisme de nouage suivant la revendication 1, caractérisé en ce que ce guide-ficelle (15) est constitué par une pièce en forme d'équerre (16) comprenant une première branche (17) s'étendant en principe transversalement à la fente (2) et une seconde branche (21) s'étendant depuis la première branche en principe dans le sens opposé au sens de déplacement de l'aiguille (3) dans cette fente, cette première et cette seconde branches (17, 21) formant entre elles un coude (20) situé au droit de la fente (2).

3. Mécanisme de nouage suivant la revendication 2, caractérisé en ce que le guide-ficelle en équerre (15) est fixé en (18, 19) par l'extrémité de sa branche transversale (17) sur le plastron (1) de la chambre à balles de la presse.

4. Mécanisme de nouage suivant la revendication 2 ou 3, caractérisé en ce qu'un bras de fixation (24) s'étend à partir du coude (20) du guide-ficelle (15), à l'opposé du côté ouvert de ce coude, et est fixé sur la paroi (1) de la chambre à balles du côté opposé de la fente (2) par rapport à la branche (17).

5. Mécanisme de nouage suivant l'une quelconque des revendications précédentes, caractérisé en ce que cette seconde partie ou branche (21) est légèrement inclinée par rapport à la direction de la fente depuis le coude ou point (20), jusqu'en un point situé de l'autre côté de la fente par rapport à la première partie ou branche (17).

6. Mécanisme de nouage suivant la revendication 5, caractérisé en ce que la seconde partie ou branche (21) est munie, à son extrémité opposée à la première partie ou branche (17), d'un bec (23) orienté à l'opposé de la première partie ou branche (17) par rapport à la fente (2).

7. Mécanisme de nouage suivant l'une quelconque des revendications précédentes, caractérisé en ce que le point ou coude (20) du guide-ficelle (15) se trouve sensiblement au milieu de la largeur de la fente (2).

**Claims**

1. A knotting mechanism for bale presses or the like of the type comprising a twine disc (6) in which a first run (26) of a bale binding twine is retained, a knotter beak (7) in which said first twine run (26) is engaged, a twine thrust finger (11) which is pivotable on a vertical axis (12) fixed to the upper panel or plate member (1) of the bale chamber of the press and into the range of which the second run (27) of the binding twine, which surrounds the bale, is carried by a needle (3) which is displaced in a slot (2) in the plate member (1) of the bale chamber of the press to place the second run (27) on the twine retaining disc (6), said twine thrust finger (11) having an edge (23) which is terminated by a projection (14) and which is disposed in the rest position of the finger in line with the slot (2) and which displaces the second run into vertical alignment with the knotter beak (7) for forming the knot, and a twine guide (15) which is mounted on the plate member (1), functionally associated with the twine thrust finger and disposed in the vicinity thereof, characterised in that said twine guide (15) comprises a first portion (17) extending generally transversely to the slot (2) of the plate member (1) of the bale chamber of the press, downstream with respect to the region of action of the twine thrust finger (11), and a second portion (21) which is directed substantially in the direction of said slot and which extends from said first portion in a direction opposite to the direction of displacement of the bales, said first and second portions (17, 21) of the twine guide (15) meeting at a point disposed in line with said slot (2) and said second portion (21) extending over part of the length of the edge (23) of the twine thrust finger (11) in the rest position of the latter.

2. A knotting mechanism according to claim 1 characterised in that said twine guide (15) comprises a right-angled member (16) comprising a first limb (17) extending generally transversely to the slot (2) and a second limb (21) extending from the first limb generally in the opposite direction to the direction of movement of the needle (3) in said slot, said first and second limbs (17, 21) forming therebetween an elbow end (20) which is disposed in line with the slot (2).

3. A knotting mechanism according to claim 2 characterised in that the right-angled twine guide (15) is fixed at (18, 19) by way of the end of its transverse limb (17) to the plate member (1) of the bale chamber of the press.

4. A knotting mechanism according to claim 2 or claim 3 characterised in that a fixing arm (24) extends from the elbow bend (20) of the twine guide (15) in opposite relationship to the open side of said elbow bend, and is fixed on the wall (1) of the bale chamber on the opposite side of the slot (2) with respect to the limb (17).

5. A knotting mechanism according to any one of the preceding claims characterised in that said second portion or limb (21) is slightly inclined with respect to the direction of the slot from the elbow bend or point (20) to a point disposed on the other side of the slot with respect to the first portion or limb (17).

6. A knotting mechanism according to claim 5 characterised in that at its end remote from the first portion or limb (17), the second portion or limb (21) is provided with a projection (22) which is oriented in the opposite direction to the first portion or limb (17) with respect to the slot (2).

7. A knotting mechanism according to any one of the preceding claims characterised in that the point or elbow bend (20) of the twine guide (15) is disposed substantially at the middle of the width of the slot (2).

**Patentansprüche**

1. Knüpfmechanismus für Ballenpressen oder dergleichen von der Art, die eine Garnscheibe (6), in de ein erster Abschnitt (26) eines Bindegarns für den Ballen gehalten wird, einen Knüpferschnabel (7), in den der erste Abschnitt (26) des Garnes eingelegt ist, einen Garnschubfinger (11), der auf einer vertikalen Achse (12) schwenkbar ist, die auf der oberen Platte oder der Abdeckung (1) der Ballenkammer der Presse befestigt ist, und in dessen Reichweite der zweite Abschnitt (27) des Bindegarns, der den Ballen umgibt, durch eine Nadel (3) gebracht wird, die sich durch einen Schlitz (2) der Abdeckung (1) der Ballenkammer der Presse bewegt, um den zweiten Abschnitt (27) auf die Garnhaltescheibe (6) zu bringen, wobei der Garnschubfinger (11) einen Rand (23) darbietet, der in einer Nase (14) endet und in der Ruhestellung des Fingers rechts von dem Schlitz (2) gelegen ist und den zweiten Abschnitt senkrecht zum Knüpferschnabel (7) zur Bildung des Knotens verschiebt, und eine Garnführung (15) umfaßt, die auf der Abdeckung (1) montiert, funktionell dem Garnschubfinger zugeordnet und in dessen Nähe montiert ist, dadurch gekennzeichnet, daß die Garnführung (15) einen ersten Bereich (17), der sich prinzipiell quer zum Schlitz (2) der Abdeckung (1) der Ballenkammer der Presse erstreckt, und zwar stromabwärts von dem Wirkungsbereich des Garnschubfingers (11), und einen zweiten Bereich (21) aufweist, der deutlich in Richtung dieses Schlitzes orientiert ist und sich von diesem ersten Bereich in einer Richtung erstreckt, welche der Vorschubrichtung des Ballens entgegengerichtet ist, daß sich die ersten und zweiten Bereiche (17, 21) der Garnführung (15) an einem Punkt vereinigen, der rechts von dem Schlitz (2) liegt, und daß sich der genannte zweite Bereich (21) oberhalb einer Teillänger der Randes (23) des Garnschubfingers (11) in dessen Ruhestellung erstreckt.

2. Knüpfmechanismus nach Anspruch 1, dadurch gekennzeichnet, daß die Garnführung (15) durch ein Winkelstück (16) gebildet wird, welches einen ersten Arm (17), der sich prinzipiell quer zu dem Schlitz (2) erstreckt und einen zweiten Arm (21) aufweist, der sich von dem ersten Arm prinzipiell in einer Richtung entgegengesetzt der Verschieberichtung der Nadel (3) in dem Schlitz erstreckt, wobei dieser erste und dieser zweite Arm (17, 21) zwischen sich eine Biegung (20) bilden, die rechts von dem Schlitz (2) angeordnet ist.

3. Knüpfmechanismus nach Anspruch 2, dadurch gekennzeichnet, daß die winkelförmige Garnführung (15) bei (18, 19) durch das Ende seines Querarmes (17) auf der Abdeckung (1) der Ballenkammer der Presse befestigt ist.

4. Knüpfmechanismus nach Anspruch 2 oder 3, dadurch gekennzeichnet, daß ein Befestigungsarm (24) sich von der Biegung (20) der Garnführung (15) aus erstreckt, und zwar gegenüber der offenen Seite der Biegung, und auf der Wandung (1) der Ballenkammer befestigt ist, und zwar mit Bezug auf den Arm (17) auf der dem Schlitz (2) abgewandten Seite.

5. Knüpfmechanismus nach irgendeinem der voranstehenden Anspruch, dadurch gekennzeichnet, daß der zweite Bereich oder Arm (21) in bezug auf die Richtung des Schlitzes von der Biegung oder dem Punkt (20) aus schwach geneigt ist, und zwar bis zu einem Punkt, der in bezug auf den ersten Bereich oder Arm (17) auf der anderen Seite des Schlitzes gelegen ist.

6. Knüpfmechanismus nach Anspruch 5, dadurch gekennzeichnet, daß der zweite Bereich oder Arm (21) an seinem von dem ersten Bereich oder Arm (17) abgewandten Ende mit einer Nase (23) ausgestattet ist, die bezogen auf den Schlitz (2) entgegen dem ersten Bereich oder Arm (17) orientiert ist.

7. Knüpfmechanismus nach irgendeinem der voranstehenden Ansprüche, dadurch gekennzeichnet, daß der Punkt oder die Biegung (20) der Garnführung (15) sich deutlich in der Mitte der Breite des Schlitzes (2) befindet.

FIG. 1

FIG. 2